# EUROPEAN PATENT APPLICATION

(11) **EP 3 537 327 A1**
(43) Date of publication of application: **11.09.2019**
(21) Application number: 17867319.0
(22) Date of filing: 24.10.2017
(51) Int. Cl.: G06F 21/60

(54) **METHOD AND SYSTEM FOR IMPLEMENTING SECURE DATA DELETION IN MOBILE TERMINAL**

(30) Priority: 01.11.2016 CN 201610935991
(71) Applicant: Huizhou TCL Mobile Communication Co., Ltd., Huizhou, Guangdong 516006 (CN)
(72) Inventor: PENG, Xiwu, Guangdong 516006 (CN); QIU, Chuanbo, Guangdong 516006 (CN)
(74) Representative: Petraz, Gilberto Luigi
(86) International application number: PCT/CN2017/107517
(87) International publication number: WO 2018/082479

(57) **Abstract**

A method and system for implementing secure data deletion in a mobile terminal. The method comprises: determining whether secure deletion needs to be performed when receiving a deletion message; placing, when secure deletion is needed, an address of data to be deleted of an EMMC indicated by the deletion message to a non-mapped device space of the EMMC; and clearing the address of the data to be deleted in the non-mapped device space of the EMMC to implement secure data deletion.

## Description

### BACKGROUND OF THE DISCLOSURE

### Field of Disclosure

The present disclosure relates to a technical field of intelligent terminals, and in particular to a method and a system for implementing data secure deletion in a mobile terminal.

### Description of Prior Art

As is well known, with the wide application of mobile terminals, users of mobile terminals store a large amount of important data or private data (hereinafter referred to as sensitive data) in the mobile terminal, such as important documents, private photos and private videos. Currently, mobile terminals generally use embedded memory of embedded multimedia card (EMMC) as a memory chip for storing user data such as sensitive data.

Currently, the mobile terminals generally delete data by direct or formatted means (the processed data is referred to as deleted data). However, only the corresponding summary information in the file allocation table of the two file systems is actually deleted. The data is hidden without being displayed, and the content of the data is still stored in the EMMC storage area without substantial deletion. The deleted data can also be recovered by scanning and restoring the summary information corresponding to the deleted data in the file allocation table, thereby reducing the security of the mobile terminal. It results in data leakage, especially sensitive data and causes economic losses. The above means cannot meet the market demand for mobile terminal security.

### SUMMARY OF THE DISCLOSURE

The technical problem to be solved by the present disclosure is to provide a method and a system for implementing data secure deletion in mobile terminal according to the deficiencies of the prior art, which can prevent the deleted data in the mobile terminal from being restored and improve the security of the mobile terminal.

To solve the above problems, the present disclosure provides the following technical solutions:
The present disclosure provides a method for implementing data secure deletion in a mobile terminal, which comprises: determining whether a secure deletion is required to process when receiving a deletion message; putting an address of to-be-deleted data of an EMMC indicated by the deletion message into an unmapped device space of the EMMC when the secure deletion is required; and deleting the address of the to-be-deleted data within the unmapped device space of the EMMC to implement data secure deletion.

In the method for implementing data secure deletion in the mobile terminal, before determining whether a secure deletion is required to process when receiving a deletion message, the method comprises: generating the deletion message according to an operation of the to-be-deleted data selected by a user after the mobile terminal enters a recovery mode, so that the deletion message carries information of the to-be-deleted data.

In the method for implementing data secure deletion in the mobile terminal, putting an address of the to-be-deleted data of an EMMC indicated by the deletion message into an unmapped device space of the EMMC when the secure deletion is required comprises: determining the address of the to-be-deleted data corresponding to the deletion message when the secure deletion is required; and sending the address of the to-be-deleted data to the EMMC, and controlling the EMMC to put the address of the to-be-deleted data into the unmapped device space of the EMMC.

In the method for implementing data secure deletion in the mobile terminal, determining the address of the to-be-deleted data corresponding to the deletion message when the secure deletion is required comprises: determining the to-be-deleted data according to the deletion message, and capturing a starting address and a size of a data area in the EMMC corresponding to the to-be-deleted data; determining the address corresponding to the to-be-deleted data in the EMMC according to the starting address and the size.

In the method for implementing data secure deletion in the mobile terminal, deleting the address of the to-be-deleted data within the unmapped device space of the EMMC to implement data secure deletion comprises: sending an instruction of Sanitize_Start to the EMMC, wherein carrying the address of the to-be-deleted data; deleting the address of the to-be-deleted data in the unmapped device space of the EMMC according to the instruction of Sanitize_Start to implement data secure deletion.

The present disclosure provides a system for implementing data secure deletion in a mobile terminal, which comprises: one or more processors; a memory; and one or more applications, wherein the one or more applications are stored in the memory and configured to be executed by the processors; the one or more applications comprises: a determining module configured to determine whether a secure deletion is required to process when receiving a deletion message; a storage module configured to put an address of to-be-deleted data of an EMMC indicated by the deletion message into an unmapped device space of the EMMC when the secure deletion is required; a deleting module configured to delete the address of the to-be-deleted data within the unmapped device space of the EMMC to implement data secure deletion.

In the system for implementing data secure deletion in the mobile terminal, the system further comprises a generating module is configured to generate the deletion message according to an operation of the to-be-deleted data selected by a user after the mobile terminal enters a recovery mode, so that the deletion message carries information of the to-be-deleted data.

In the system for implementing data secure deletion in the mobile terminal, the storage module comprises a determining unit configured to determine the deletion message corresponding to the address of the to-be-deleted data when the secure deletion is required; and a controlling unit configured to send the address of the to-be-deleted data to the EMMC, and control the EMMC to put the address of the to-be-deleted data into the unmapped device space of the EMMC.

In the system for implementing data secure deletion in the mobile terminal, the determining unit comprises a capturing subunit configured to determine the address of the to-be-deleted data according to the to-be-deleted data, and capture a starting address and a size of a data area in the EMMC corresponding to the deletion message; a determining subunit configured to determine the address corresponding to the to-be-deleted data in the EMMC according to the starting address and the size.

In the system for implementing data secure deletion in the mobile terminal, the deleting module comprises a sending unit configured to send an instruction of Sanitize_Start to the EMMC, wherein carrying the address of the to-be-deleted data; a deleting unit configured to delete the address of the to-be-deleted data in the unmapped device space of the EMMC according to the instruction of Sanitize_Start to implement data secure deletion.

The present disclosure provides a system for implementing data secure deletion in a mobile terminal, the system comprises one or more processors; a memory; and one or more applications, wherein the one or more applications are stored in the memory and configured to perform steps by the processor: determining whether a secure deletion is required to process when receiving a deletion message; putting an address of to-be-deleted data of an EMMC indicated by the deletion message into an unmapped device space of the EMMC when the secure deletion is required; and deleting the address of the to-be-deleted data within the unmapped device space of the EMMC to implement data secure deletion.

In the system for implementing data secure deletion in the mobile terminal, before determining whether a secure deletion is required to process when receiving a deletion message comprises: generating the deletion message according to an operation of the to-be-deleted data selected by a user after the mobile terminal enters a recovery mode, so that the deletion message carries information of the to-be-deleted data.

In the system for implementing data secure deletion in the mobile terminal, putting an address of the to-be-deleted data of an EMMC indicated by the deletion message into an unmapped device space of the EMMC when the secure deletion is required comprises: determining the deletion message corresponding to the address of the to-be-deleted data when the secure deletion is required; and sending the address of the to-be-deleted data to the EMMC, and controlling the EMMC to put the address of the to-be-deleted data into the unmapped device space of the EMMC.

In the system for implementing data secure deletion in the mobile terminal, determining the deletion message corresponding to the address of the to-be-deleted data when the secure deletion is required comprises: determining the address of the to-be-deleted data according to the deletion message, and capturing a starting address and a size of a data area in the EMMC corresponding to the to-be-deleted data; determining the address corresponding to the to-be-deleted data in the EMMC according to the starting address and the size.

In the system for implementing data secure deletion in the mobile terminal, deleting the address of the to-be-deleted data within the unmapped device space of the EMMC to implement data secure deletion comprises: sending an instruction of Sanitize_Start to the EMMC, wherein earring the address of the to-be-deleted data; deleting the address of the to-be-deleted data in the unmapped device space of the EMMC according to the instruction of Sanitize_Start to implement data secure deletion.

The beneficial effect: compared with the prior art, the present disclosure provides a method and a system for implementing data secure deletion in a mobile terminal. The method comprises determining whether a secure deletion is required to process when receiving a deletion message; putting an address of to-be-deleted data of an EMMC indicated by the deletion message into an unmapped device space of the EMMC when the secure deletion is required; and deleting the address of the to-be-deleted data within the unmapped device space of the EMMC to implement data secure deletion. The present disclosure places the address of the to-be-deleted data into the unmapped device space of the EMMC, and physically clear the EMMC to delete the address of the to-be-deleted data in the unmapped device space of the EMMC for preventing recovery of deleted data in the mobile terminal. Thus, the security of mobile terminals can be improved. Thereby meeting the market demand for the security of mobile terminals.

### BRIEF DESCRIPTION OF THE DRAWINGS

FIG. 1 is a flowchart of a method for implementing data secure deletion in a mobile terminal according to a preferred embodiment of the present disclosure.
FIG. 2 is a structural principle diagram of a system for implementing data secure deletion in a mobile terminal according to the present disclosure.
FIG. 3 is a structural schematic diagram of a system for implementing data secure deletion in a mobile terminal according to a preferred embodiment of the present disclosure.

### DETAILED DESCRIPTION OF THE PREFERRED EMBODIMENTS

The present disclosure provides a method for implementing data secure deletion in a mobile terminal, for the purposes of the present invention, technical solutions and advantages clearer, explicit, the following detailed description of the present invention further. It should be understood that the specific embodiments described herein are only intended to illustrate the present invention and are not intended to limit the present invention.

In the present disclosure, the elements used to represent such as "module", "part" or "unit" has been described only in favor of the present disclosure, in itself no specific meaning. Thus, the "module", "part" or "unit" may be used mixed.

The mobile terminal may be embodied in various forms. For example, the terminal described in the present disclosure may include mobile terminals, such as a mobile phone, a smart phone, a laptop computer, a digital broadcast receiver, PDA (personal digital assistant), PAD (tablet), PMP (portable multimedia player), and navigation devices, and fixed terminals, such as a mobile terminal, a digital TV, and a desktop computer. However, those skilled in the art will understand that, except for particular purposes outside the moving member, according to the configuration of embodiment of the present disclosure is also applicable to fixed types of terminals.

The following examples and specific embodiments of the present disclosure will be further described in conjunction with the accompanying drawings.

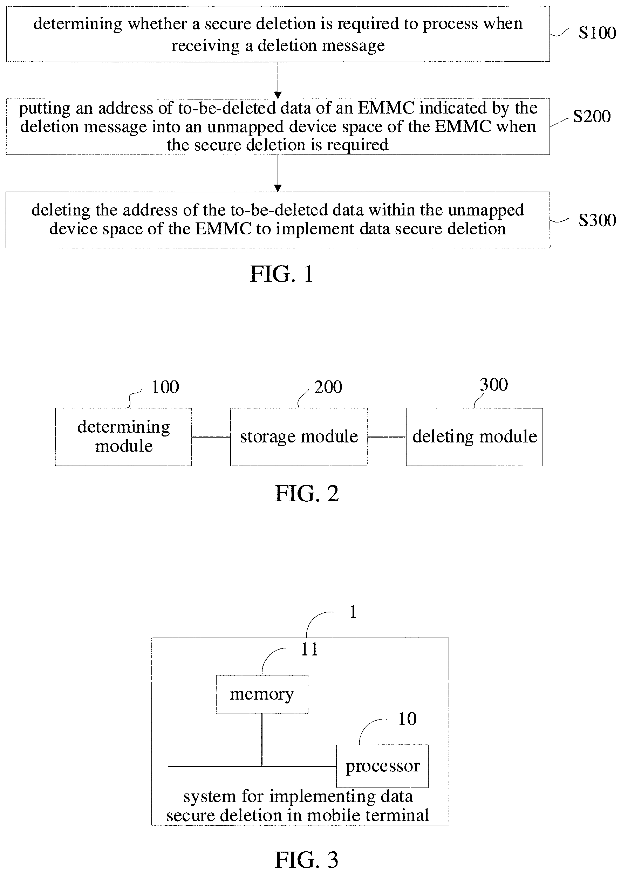

Referring to FIG. 2, a flowchart of a method for implementing data secure deletion in a mobile terminal according to a preferred embodiment of the present disclosure is illustrated. The method comprises:
S100, determining whether a secure deletion is required to process when receiving a deletion message.

Specifically, the deletion message is used to indicate that the space to be deleted that keeps to-be-deleted data (such as one or more files or a directory) is deleted. The deletion message carries information of the to-be-deleted data so that an address of the to-be-deleted data can be determined according to the information, and the basis for subsequently deleting the address of the to-be-deleted data in an EMMC (EMMC) is provided.

The deletion message is generated according to a deletion instruction of a user. Specifically, the deletion message is generated when the mobile terminal enters a recovery mode. The spaces of the to-be-deleted (such as one or more files or a directory) indicated by the deletion message are performed deletion or formatting operations. This is commonly referred to as the operation of data by restoring factory settings. The present disclosure can restore the specified data to the factory settings or the secure deletion in the recovery mode. It provides users with convenience in use. At the same time, it solves the problem that all data must be deleted when the factory settings are restored.

In the embodiment, before determining whether the secure deletion is required to process when receiving a deletion message, the method comprises:
S01, after the mobile terminal enters the recovery mode, the deletion message is generated according to the operation of the user to select the to-be-deleted data, so that the deletion message carries the information of the to-be-deleted data.

Specifically, the mobile terminal generally supports two operating modes including a user mode and a recovery mode. In the user mode, the user can operate and set up the system or application, and the related data of operation and setting are also stored in the data of the system. In the recovery mode, the terminal system can complete operations such as system upgrade, modification, and factory reset.

After the mobile terminal enters the Recovery mode, the user can select the data that needs to be deleted. When the mobile terminal receives the selection operation of the user, the mobile terminal determines the information of the corresponding data according to the selection operation, and generates a deletion message according to the data address, so that the deletion message carries information of the to-be-deleted data. The information of the to-be-deleted data includes a starting address and a size of the to-be-deleted data.

In the embodiment, determining whether the secure deletion is required can indicates that whether the secure deletion is performed through a preset configuration item. If the configuration item is set the secure deletion, it indicates that a secure deletion is required. The step S100 further includes: presetting a configuration item for indicating whether to perform secure deletion; and performing the secure deletion as the configuration item is set to perform secure deletion.

S200, when the secure deletion is required, the address of the to-be-deleted data of the EMMC indicated by the deletion message is placed in the unmapped device space of the EMMC.

Specifically, the EMMC, embedded memory of embedded multimedia card, has a physical address of the stored data. The EMMC is set up with two address spaces, and the two address spaces are a mapped host address space and an unmapped host address space. The mapped host address space includes a mapping table, which stores a mapping relationship between its address and a physical memory address, and points to data currently being used. The unmapped host address space also includes a mapping table, which stores a mapping relationship between its address and a physical memory address, and points to an unused space or a space in which data needs to be deleted.

In this embodiment, placing the address of the to-be-deleted data of the EMMC indicated by the deletion message into the unmapped device space of the EMMC, which means moving the mapping relationship of the storage area corresponding to the to-be-deleted data from the mapped host address space to the unmapped host address space. When the corresponding storage area is read, all 0/1 is returned, and the deletion of the to-be-deleted data is implemented. In practical applications, the erase instruction is used to move the mapping relationship of the erased storage area from the mapping table on the mapped host address space to the mapping table of the unmapped host address space. The erase instruction deletes the address space occupied by the data in units of erase group.

For example, putting the address of the to-be-deleted data of the EMMC indicated by the deletion message into the unmapped device space of the EMMC when the secure deletion is required includes:
S201, determining the address of the to-be-deleted data corresponding to the deletion message when the secure deletion is required.
S202, sending the address of the to-be-deleted data to the EMMC, and controlling the EMMC to put the address of the to-be-deleted data into the unmapped device space of the EMMC.

Specifically, when the secure deletion is required, the corresponding to-be-deleted data is determined according to the deletion message, and an address area corresponding to the to-be-deleted data is captured in the EMMC. The address area is stored in the mapped address space of the EMMC. In practical applications, according to the deletion information, the starting address and the size corresponding to the to-be-deleted data in the mapped address space of the EMMC can be determined. The the starting address and size are transmitted to the EMMC through CMD35 and CMD36 instructions. The EMMC determines the address of the to-be-deleted data according to the CMD35 and CMD36 instructions. The address of the to-be-deleted data is moved from the mapped address space to the unmapped address space. When the address of the mapped address space is accessed, the return value is all 0/1, and the data deletion is implemented.

In this embodiment, determining the address of the to-be-deleted data corresponding to the deletion message when the secure deletion is required comprises:
S2011, determining the to-be-deleted data according to the deletion message, and capturing a starting address and a size of a data area in the EMMC corresponding to the to-be-deleted data.
S2012, determining the address corresponding to the to-be-deleted data in the EMMC according to the starting address and the size.

Specifically, according to a direct mapping relationship between the data and the EMMC storage space, a starting address and a size of a data area in the EMMC corresponding to the to-be-deleted data are determined. In this way, the address occupied by the to-be-deleted data in the EMMC can be determined according to the starting address and the size.

S300, deleting the address of the to-be-deleted data within the unmapped device space of the EMMC to implement data secure deletion.

Specifically, deleting the address of the to-be-deleted data within the unmapped device space of the EMMC means the address of the to-be-deleted data on the physical memory is deleted. It makes the data unable to recover and achieves the secure deletion.

For example, deleting the address of the to-be-deleted data within the unmapped device space of the EMMC to implement data secure deletion comprises:
S301, sending an instruction of Sanitize_Start to the EMMC, wherein carrying the address of the to-be-deleted data.
S302, deleting the address of the to-be-deleted data in the unmapped device space of the EMMC according to the instruction of Sanitize_Start to implement data secure deletion.

The instruction of Sanitize_Start is used to delete the mapping relationship on the mapping table of the unmapped host address space, erase the contents of the physical block, and replace with a full 0/1. So that the physical memory is clear. The data deleted in this way is not be recovered to implement data secure deletion.

As shown in FIG. 2, the present disclosure further provides a system for implementing data secure deletion in a mobile terminal, the system comprises:
A determining module 100 is configured to determine whether a secure deletion is required to process when receiving a deletion message;
A storage module 200 is configured to put an address of to-be-deleted data of an EMMC indicated by the deletion message into an unmapped device space of the EMMC when the secure deletion is required;
A deleting module 300 is configured to delete the address of the to-be-deleted data within the unmapped device space of the EMMC to implement data secure deletion.

The system for implementing data secure deletion in a mobile terminal further comprises:
A generating module is configured to generate the deletion message according to an operation of the to-be-deleted data selected by a user after the mobile terminal enters a recovery mode, so that the deletion message carries information of the to-be-deleted data.

In the system for implementing data secure deletion in a mobile terminal, the storage module comprises:
A determining unit is configured to determine the deletion message corresponding to the address of the to-be-deleted data when the secure deletion is required;
A controlling unit configured to send the address of the to-be-deleted data to the EMMC, and control the EMMC to put the address of the to-be-deleted data into the unmapped device space of the EMMC.

In the system for implementing data secure deletion in a mobile terminal, the determining unit comprises:
A capturing subunit is configured to determine the address of the to-be-deleted data according to the to-be-deleted data, and capture a starting address and a size of a data area in the EMMC corresponding to the deletion message;
A determining subunit is configured to determine the address corresponding to the to-be-deleted data in the EMMC according to the starting address and the size.

In the system for implementing data secure deletion in a mobile terminal, the deleting module comprises:
A sending unit is configured to send an instruction of Sanitize_Start to the EMMC, wherein carrying the address of the to-be-deleted data;
A deleting unit configured to delete the address of the to-be-deleted data in the unmapped device space of the EMMC according to the instruction of Sanitize_Start to implement data secure deletion.

The various modules of the system for implementing data secure deletion in a mobile terminal have been described in detail in the above method, and will not be further described herein.

In the embodiments provided by the present disclosure, it should be understood that the disclosed systems and methods may be implemented in other manners. For example, the device embodiments described above are merely illustrative, the division of the modules is merely a logical functional division. There are other ways to divide the actual implementation. For example, multiple units or components may be combined or integrated into another system, and some features may be omitted or not implemented. In addition, mutual coupling, direct coupling or communication connection shown or discussed may be through some interfaces. The indirect coupling or communication connection of the device or unit may be in electrical, mechanical or other form.

The units described as separate components may be or not physically separate. The component displayed as a unit may be or not a physical unit. It can be located in one place, or distributed to multiple network units. Some or all of the units may be selected according to actual needs to achieve the purpose of the solution of the embodiment.

In addition, each functional unit in various embodiments of the present disclosure may be integrated in one processing unit. It is possible that each unit physically exists separately, or to integrate two or more units in one unit. The above integrated unit can be implemented in the form of hardware or in the form of hardware plus software functional units.

The described above integrated unit implemented in the form of a software functional unit can be stored in a computer readable storage medium. The above software functional unit is stored in a storage medium and includes several instructions. The steps of the method of the various embodiments of the present disclosure are performed to cause a computer device (such as a personal computer, a server, or a network device, etc.) or a processor. Said storage medium includes: USB, mobile hard disk, read-only memory (ROM), random access memory (RAM), magnetic disk, or optical disk, which can store program codes. For example, as shown in FIG. 3, in the embodiment of the present disclosure, the system 1 for implementing data secure deletion in the mobile terminal comprises a processor 10 and a memory 11. The memory 11 is connected to the processor 10, and the program is stored in the memory 11 and configured to be executed by the processor 10.

Finally, it should be noted that the above embodiments are only used to illustrate the technical solutions of the present disclosure, and are not limited thereto. Although the present disclosure has been described in detail with reference to the foregoing embodiments, it should be understood by those skilled in the art that the technical solutions described in the foregoing embodiments may be modified, or some of the technical features may be equivalently replaced. These modifications and substitutions do not depart from the spirit and scope of the technical solutions of the embodiments of the present disclosure.

## Claims

1. A method for implementing data secure deletion in a mobile terminal, comprising:
determining whether a secure deletion is required to process when receiving a deletion message;
putting an address of to-be-deleted data of an EMMC indicated by the deletion message into an unmapped device space of the EMMC when the secure deletion is required; and
deleting the address of the to-be-deleted data within the unmapped device space of the EMMC to implement data secure deletion.

2. The method according to claim 1, wherein before determining whether a secure deletion is required to process when receiving a deletion message, the method comprises:
generating the deletion message according to an operation of the to-be-deleted data selected by a user after the mobile terminal enters a recovery mode, so that the deletion message carries information of the to-be-deleted data.

3. The method according to claim 1, wherein putting an address of the to-be-deleted data of an EMMC indicated by the deletion message into an unmapped device space of the EMMC when the secure deletion is required comprises:
determining the address of the to-be-deleted data corresponding to the deletion message when the secure deletion is required; and
sending the address of the to-be-deleted data to the EMMC, and controlling the EMMC to put the address of the to-be-deleted data into the unmapped device space of the EMMC.

4. The method according to claim 3, wherein determining the address of the to-be-deleted data corresponding to the deletion message when the secure deletion is required comprises:
determining the to-be-deleted data according to the deletion message, and capturing a starting address and a size of a data area in the EMMC corresponding to the to-be-deleted data;
determining the address corresponding to the to-be-deleted data in the EMMC according to the starting address and the size.

5. The method according to claim 1, wherein deleting the address of the to-be-deleted data within the unmapped device space of the EMMC to implement data secure deletion comprises:
sending an instruction of Sanitize_Start to the EMMC, wherein carrying the address of the to-be-deleted data;
deleting the address of the to-be-deleted data in the unmapped device space of the EMMC according to the instruction of Sanitize_Start to implement data secure deletion.

6. A system for implementing data secure deletion in a mobile terminal, comprising:
one or more processors;
a memory; and
one or more applications, wherein the one or more applications are stored in the memory and configured to be executed by the processors; the one or more applications comprises:
a determining module configured to determine whether a secure deletion is required to process when receiving a deletion message;
a storage module configured to put an address of to-be-deleted data of an EMMC indicated by the deletion message into an unmapped device space of the EMMC when the secure deletion is required;
a deleting module configured to delete the address of the to-be-deleted data within the unmapped device space of the EMMC to implement data secure deletion.

7. The system according to claim 6, wherein the system further comprises:
a generating module is configured to generate the deletion message according to an operation of the to-be-deleted data selected by a user after the mobile terminal enters a recovery mode, so that the deletion message carries information of the to-be-deleted data.

8. The system according to claim 6, wherein the storage module comprises:
a determining unit configured to determine the deletion message corresponding to the address of the to-be-deleted data when the secure deletion is required; and
a controlling unit configured to send the address of the to-be-deleted data to the EMMC, and control the EMMC to put the address of the to-be-deleted data into the unmapped device space of the EMMC.

9. The system according to claim 8, wherein the determining unit comprises: a capturing subunit configured to determine the address of the to-be-deleted data according to the to-be-deleted data, and capture a starting address and a size of a data area in the EMMC corresponding to the deletion message; a determining subunit configured to determine the address corresponding to the to-be-deleted data in the EMMC according to the starting address and the size.

10. The system according to claim 6, wherein the deleting unit comprises:
a sending unit configured to send an instruction of Sanitize_Start to the EMMC, wherein carrying the address of the to-be-deleted data;
a deleting unit configured to delete the address of the to-be-deleted data in the unmapped device space of the EMMC according to the instruction of Sanitize_Start to implement data secure deletion.

11. A system for implementing data secure deletion in a mobile terminal, comprising:
one or more processors;
a memory; and
one or more applications, wherein the one or more applications are stored in the memory and configured to perform steps by the processor:
determining whether a secure deletion is required to process when receiving a deletion message;
putting an address of to-be-deleted data of an EMMC indicated by the deletion message into an unmapped device space of the EMMC when the secure deletion is required; and
deleting the address of the to-be-deleted data within the unmapped device space of the EMMC to implement data secure deletion.

12. The system according to claim 11, wherein before determining whether a secure deletion is required to process when receiving a deletion message comprises:
generating the deletion message according to an operation of the to-be-deleted data selected by a user after the mobile terminal enters a recovery mode, so that the deletion message carries information of the to-be-deleted data.

13. The system according to claim 11, wherein putting an address of the to-be-deleted data of the EMMC indicated by the deletion message into an unmapped device space of the EMMC when the secure deletion is required comprises:
determining the deletion message corresponding to the address of the to-be-deleted data when the secure deletion is required; and
sending the address of the to-be-deleted data to the EMMC, and controlling the EMMC to put the address of the to-be-deleted data into the unmapped device space of the EMMC.

14. The system according to claim 11, wherein determining the deletion message corresponding to the address of the to-be-deleted data when the secure deletion is required comprises:
determining the address of the to-be-deleted data according to the deletion message, and capturing a starting address and a size of a data area in the EMMC corresponding to the to-be-deleted data;
determining the address corresponding to the to-be-deleted data in the EMMC according to the starting address and the size.

15. The system according to claim 11, wherein deleting the address of the to-be-deleted data within the unmapped device space of the EMMC to implement data secure deletion comprises:
sending an instruction of Sanitize_Start to the EMMC, wherein carring the address of the to-be-deleted data;
deleting the address of the to-be-deleted data in the unmapped device space of the EMMC according to the instruction of Sanitize_Start to implement data secure deletion.
